(19) **Europäisches Patentamt / European Patent Office / Office européen des brevets**

(11) **EP 4 782 827 A1**

(12) **EUROPEAN PATENT APPLICATION**
published in accordance with Art. 153(4) EPC

(43) Date of publication:
29.07.2026 Bulletin 2026/31

(21) Application number: 25821832.0

(22) Date of filing: 04.06.2025

(51) International Patent Classification (IPC):
*G01N 27/62* (2021.01)  *H01J 49/16* (2006.01)

(52) Cooperative Patent Classification (CPC):
G01N 27/62; G01N 27/68; H01J 49/04; H01J 49/10; H01J 49/16

(86) International application number:
PCT/JP2025/020315

(87) International publication number:
WO 2025/258486 (18.12.2025 Gazette 2025/51)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH LA MA MD TN

(30) Priority: 10.06.2024 JP 2024093955

(71) Applicant: AMR Incorporated
Tokyo 152-0031 (JP)

(72) Inventors:
• SAKAKURA Motoshi
  Tokyo 152-0031 (JP)
• TOKUE Ken
  Tokyo 152-0031 (JP)
• HIKE Hiroshi
  Tokyo 152-0031 (JP)
• SHIOTA Teruhisa
  Tokyo 152-0031 (JP)
• USUI Fumihiko
  Tokyo 152-0031 (JP)

(74) Representative: Müller-Boré & Partner
Patentanwälte PartG mbB
Friedenheimer Brücke 21
80639 München (DE)

(54) **ION INTRODUCTION DEVICE AND ION INTRODUCTION METHOD FOR INTRODUCING IONS INTO MASS SPECTROMETER, MASS SPECTROMETRY SYSTEM, MASS SPECTROMETRY METHOD, IONIZATION DEVICE, AND IONIZATION METHOD**

(57) Technical Problem: Provide an ionization device and ionization method capable of sustaining stable dark discharge at low voltage and enabling stable ionization of various samples, from gases to solids.

Solution to Problem: The present invention is an ionization device that applies voltage to a mixture of argon and nitrogen gases in an atmospheric environment and excites argon through dark discharge to ionize the sample. The ionization device comprises a mixed gas generation unit, a sample supply unit, and an ionization means. The mixed gas generation unit mixes argon and nitrogen to generate mixed gas. The sample supply unit contacts the mixed gas with the sample to generate sample components. The ionization means excite the sample components through dark discharge to generate sample ions. Furthermore, the present invention is an ion introduction device and ion introduction method for introducing the sample ions into a mass spectrometer, and a mass spectrometry system that ionizes a sample, introduces the sample ions into the mass spectrometer, and analyzes its mass.

EP 4 782 827 A1

<FIG.1>

| **(1)** Step of generating mixed gas from argon and nitrogen |
| --- |

↓

| **(2)** Step of making the mixed gas heatable |
| --- |

↓

| **(3)** Step of ejecting the mixed gas into atmospheric air |
| --- |

↓

| **(4)** Step of contacting a sample with the mixed gas to form mixed gas containing sample components |
| --- |

↓

| **(5)** Step of introducing the mixed gas containing sample components into an ionization region |
| --- |

↓

| **(6)** Step of exciting argon with dark discharge to generate sample ions |
| --- |

↓

| **(7)** Step of introducing the sample ions into a mass spectrometer |
| --- |

**Description**

TECHNICAL FIELD

The present invention relates to a method and device for atmospheric pressure ionization of samples for mass spectrometry.

BACKGROUND ART

Mass spectrometry is an essential method for analyzing various substances. In recent years, there has been active development of atmospheric pressure ionization (ambient ionization) methods, which enable real-time, in situ mass analysis by ionizing target sample components in the ambient atmosphere without special sample preparation or pretreatment.

For example, methods combining helium gas and glow discharge (Patent Documents 1 and 2) are known, but in recent years, there have been issues with the stable supply of helium gas used as a carrier gas. As an alternative to helium gas, a method combining nitrogen gas and corona discharge (Patent Document 3) has been developed. However, side reactions caused by nitrogen ($N_2$) radicals make it difficult to identify unknown substances. Furthermore, discharge methods using hydrogen pose safety concerns due to the flammable gas. A method without a carrier gas (Patent Document 5) has also been attempted. However, because of utilizing luminescent and self-sustaining discharge, there is a same issue as Patent Document 3 by the influence of nitrogen radicals.

Furthermore, known atmospheric pressure ionization methods using discharge require high voltages. For example, when helium gas is used (Patent Documents 1 and 2), the DART method requires 5 kV, the DCBI method requires 3 kV, and the APCI method requires approximately 3 kV. Even Patent Document 5, which does not use a carrier gas, requires a high voltage of 2.5 kV or more.

Patent Document 4 discloses a method for ionizing samples using dark discharge. This method utilizes discharge without luminescence, i.e., dark discharge, by applying voltage only to argon gas in an ambient atmosphere to generate dark discharge. Although the dark discharge can be achieved at low voltage (1.8 kV or higher), it has been difficult to maintain the stable dark discharge state during sample ionization.

PRIOR ART DOCUMENTS

Patent Documents

Patent Document 1: WO2009/009228

Patent Document 2: WO2010/075769

Patent Document 3: US7977629

Patent Document 4 JP6382166

Patent Document 5 JP7453642

SUMMARY OF THE INVENTION

Problem to be Resolved by the Invention

In a method for ionizing a sample by applying voltage to argon gas in an atmospheric environment and using dark discharge, there is a need for an ionization device that can stably sustain dark discharge at a low voltage and that can stably ionize a variety of samples, from gases and liquids to difficult-to-vaporize solids, without being affected by nitrogen radicals. Furthermore, there is a need for an ionization device that uses a carrier gas that is reliably supplied, highly safe, inexpensive, and easy to use.

Means of Solving Problem

The means for solving the above problem is (1) an ion introduction device for introducing ions into a mass spectrometer, the ion introduction device comprising a mixed gas generation unit, a sample supply unit, and an interface unit. The mixed gas generation unit generates mixed gas by mixing argon and nitrogen. The sample supply unit is provided in an atmospheric environment. A sample is placed in the sample supply unit, and the mixed gas ejected from the mixed gas generation unit is brought into contact with the sample to form mixed gas containing sample components. The interface unit has an exhaust port communicating with an external exhaust system and is in close contact with one surface of the mass spectrometer to form an ionization region. The ionization region is maintained at a pressure lower than the atmospheric pressure by the external exhaust system. The sample component-containing mixed gas is introduced into the ionization region from the sample supply unit, and the sample component-containing mixed gas is excited by dark discharge to generate sample ions. The sample ions are then introduced from the ionization region into the mass spectrometer via an ion transfer port of the mass spectrometer.

(2) In addition to (1), the ion introduction device of the present invention is characterized in that it has a discharge electrode positioned in the ionization region between the ion transfer port and an inlet path for introducing the sample component-containing mixed gas, and generates dark discharge between the discharge electrode and the ion transfer port to generate sample ions from the sample components in the sample component-containing mixed gas.

(3) In addition to (2), the ion introduction device of the present invention is characterized in that the discharge electrode is covered with an insulator except for its tip, and (4) in addition to (2), the voltage applied between the discharge electrode and the ion transfer port is 1.8 kV or more and 3.0 kV or less.

(5) In addition to (1), the ion introduction device of the present invention is also characterized in that the volume ratio of argon in the mixed gas generated in the mixed gas generation unit is 2% or more and 67% or less, preferably 17% or more and 25% or less; (6) in addition to (1), the mixed gas generation unit further comprises heating means for the mixed gas; (7) in addition to (1), the sample supply unit further comprises heating means for the sample.

(8) In addition to (1), the ion introduction device of the present invention is also characterized in that the sample supply unit is equipped with a sample container exchange mechanism that can accommodate multiple sample containers containing samples; (9) in addition to (1), the sample container exchange mechanism can automatically exchange multiple sample containers continuously.

(10) In addition to (1), the ionization region is maintained at a higher pressure than the mass spectrometer; and the gas flow passes through the mixed gas generation unit, the sample supply unit, and the ionization region before entering the mass spectrometer.

(11) A mass spectrometry system of the present invention, which ionizes a sample, introduces it into a mass spectrometer, and analyzes its mass, comprises a mixed gas generation unit, a sample supply unit, and an interface unit. The mixed gas generation unit generates mixed gas by mixing argon and nitrogen. The sample supply unit is provided in an atmospheric environment. A sample is placed in the sample supply unit. The mixed gas ejected from the mixed gas generation unit is brought into contact with the sample to form mixed gas containing sample components. The interface unit has an exhaust port communicating with an external exhaust system and is in close contact with one surface of the mass spectrometer to form an ionization region. The ionization region is maintained at a pressure lower than atmospheric pressure by the external exhaust system. The sample component-containing mixed gas is introduced from the sample supply unit into the ionization region, and the sample component-containing mixed gas is excited by dark discharge to generate sample ions. The sample ions are then introduced from the ionization region into the mass spectrometer via an ion transfer port of the mass spectrometer, whereby their mass is analyzed.

(12) The ion introduction method of the present invention for introducing ions into a mass spectrometer includes the steps of mixing argon and nitrogen to generate mixed gas, ejecting the mixed gas into an atmospheric environment, contacting the mixed gas with a sample placed in the atmospheric environment to form mixed gas containing sample components, introducing the mixed gas containing sample components into an ionization region maintained at negative pressure relative to the atmospheric environment by an external exhaust system, exciting the mixed gas containing sample components in the ionization region by dark discharge to generate sample ions, and introducing the sample ions from the ionization region into a mass spectrometer.

(13) In addition to (12), the ion introduction method of the present invention further comprises a step of heating the mixed gas after the step of generating the mixed gas. (14) In addition to (12), the step of forming the sample component-containing mixed gas includes heating the sample placed in the atmospheric environment.

(15) In addition to (12), the step of forming the sample component-containing mixed gas includes a sample exchange step of exchanging the sample that has been contacted with the mixed gas for the sample that has not been contacted with the mixed gas, in the atmospheric environment. (16) In addition to (15), the sample exchange step includes exchanging the contact-treated sample for an untreated sample using a mechanism for automatically exchanging multiple samples.

(17) The ionization device of the present invention for ionizing a sample comprises a mixed gas generation unit, a sample supply unit, and an interface unit. The mixed gas generation unit generates mixed gas by mixing argon and nitrogen. The sample supply unit is provided in an atmospheric environment. A sample is placed in the sample supply unit. The mixed gas discharged from the mixed gas generation unit is brought into contact with the sample to form mixed gas containing a sample component. The interface unit has an ionization region into which the sample component-containing mixed gas is introduced from the sample supply unit. In the ionization region, the sample component-containing mixed gas is excited by dark discharge to generate sample ions.

(18) Furthermore, the ionization method of the present invention for ionizing a sample is characterized by including the steps of: mixing argon and nitrogen to generate mixed gas; ejecting the mixed gas into an atmospheric environment; contacting the mixed gas with a sample placed in the atmospheric environment to form mixed gas containing sample components; introducing the mixed gas containing sample components into an ionization region; and exciting the mixed gas containing sample components in the ionization region by dark discharge to generate sample ions.

Advantageous Effect of the Invention

The present invention provides an ionization method using stable dark discharge under low voltage conditions by using a carrier gas composed of argon and nitrogen, which are inert (non-flammable) gases with stable supply. It also provides a simple and inexpensive ion introduction device and ion introduction method for introducing ions into a mass spectrometer. Furthermore, sample heating enables ionization of high-boiling point samples and so on, which was previously not possible in conventional dark discharge ionization. Furthermore, heating the carrier gas and/or sample can improve the sensitivity of mass spectrometry.

BRIEF DESCRIPTION OF THE DRAWINGS

FIG. 1 is a process diagram illustrating a method of forming sample ions for introduction ions into a mass spectrometer, according to the present invention.

FIG. 2 is a schematic diagram of an ion introduction device for introducing ions into a mass spectrometer, according to the present invention.

FIG. 3 is a simplified diagram of one embodiment of an ion introduction device for introducing ions into a mass spectrometer, according to the present invention. In FIG. 3, the mixed gas flow path and the sample component-containing mixed gas inlet path are shown in cross section, and the surrounding structure is also shown in cross section. Also in FIG. 3, the interface unit and one surface of the mass spectrometer form an ionization region. The ion introduction device in FIG. 3 includes a mixed gas generation unit, a sample supply unit, and an interface unit.

FIG. 4 is a diagram showing the ion introduction device with a sample stage and a sample container arranged thereon. Also in FIG. 4, the mixed gas generation unit, sample supply unit, and interface unit are integrally configured to form an ionization unit. The ionization unit is attached to the mass spectrometer using hinges. Furthermore, FIG. 4 schematically illustrates the mass spectrometer. Note that the following figures do not show the entire mass spectrometer, but only its essential parts.

FIG. 5 is a cross-sectional view of FIG. 4, taken along a plane including the mixed gas flow channel and the sample component-containing mixed gas inlet channel within the mixed gas generation unit. In FIG. 5, the interface unit is also shown in cross section. Furthermore, FIG. 5 also shows the ionization region, which is made up of the interface unit and one surface of the mass spectrometer.

FIG. 6 is a view of the ion introduction device of FIG. 4, viewed from a different angle.

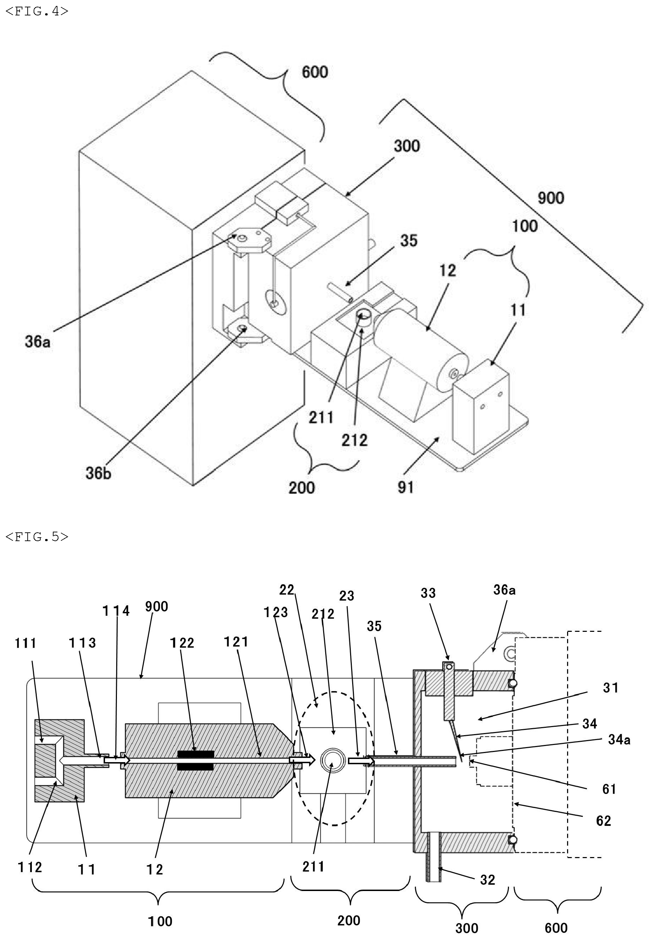

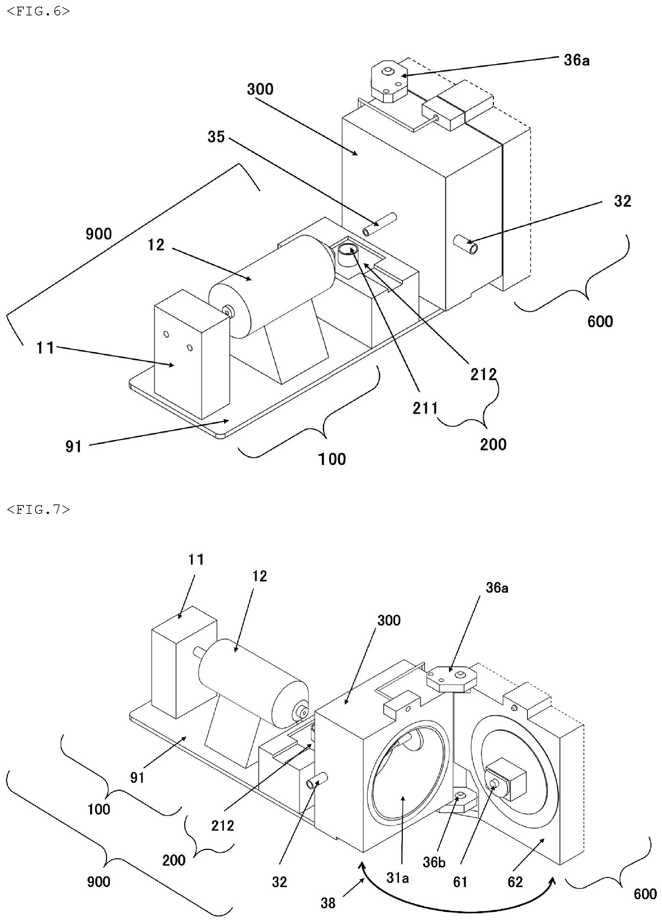

In FIG. 6, the mixed gas generation unit, sample supply unit, and interface unit are integrated to form an ionization unit. The ionization unit is connected to the mass spectrometer using hinges. Also, as explained in FIG. 4, FIG. 6 shows only a portion of the mass spectrometer.

FIG. 7 is a diagram showing the state in FIG. 6 where the ionization unit is opened and closed relative to the mass spectrometer. FIG. 7 shows the state in which the interface unit constituting the ionization unit is connected to the mass spectrometer by hinges, and the ionization region is open.

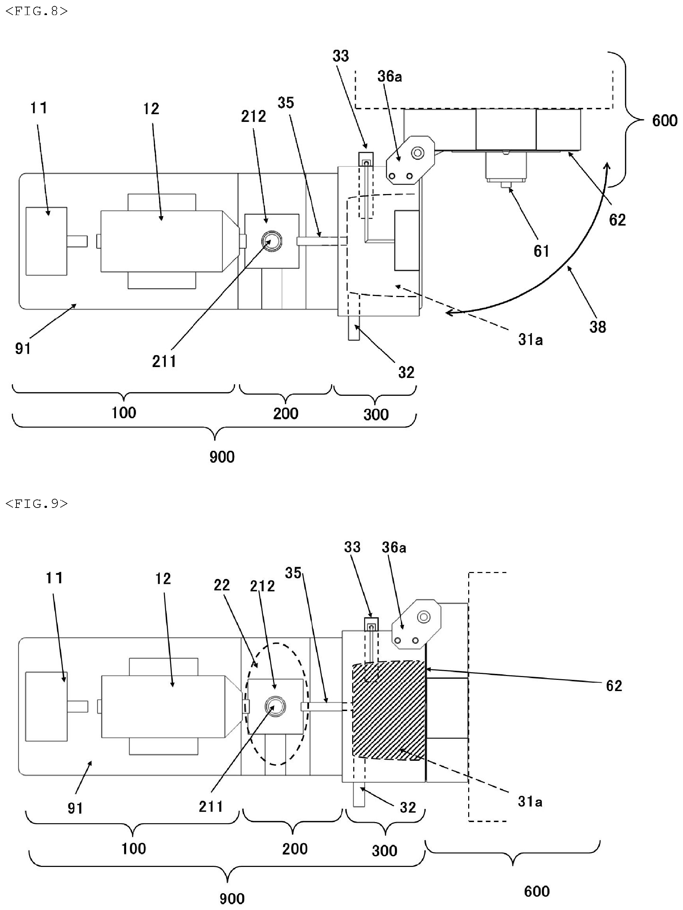

FIG. 8 is a diagram showing the state in FIG. 7 as viewed from above.

FIG. 9 is a diagram showing the ionization region formed by the interface unit and the mass spectrometer. In FIG. 9, the ionization region is hatched to clarify it.

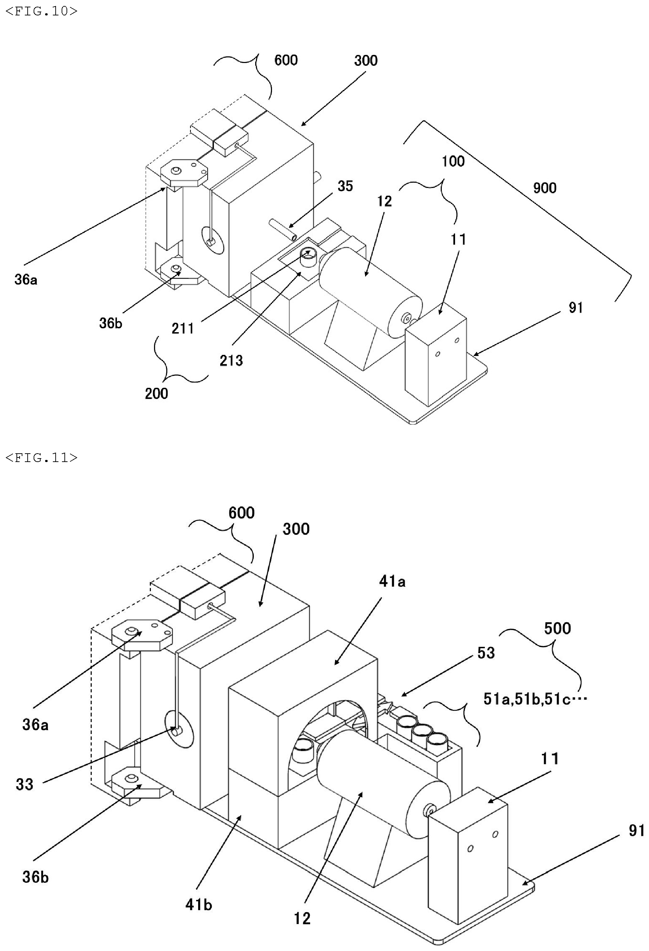

FIG. 10 is a diagram showing an embodiment in which a heating plate is provided on a support table on which sample containers are placed.

FIG. 11 is a diagram showing the configuration of FIG. 10, further provided with a covering member and a sample container exchange mechanism.

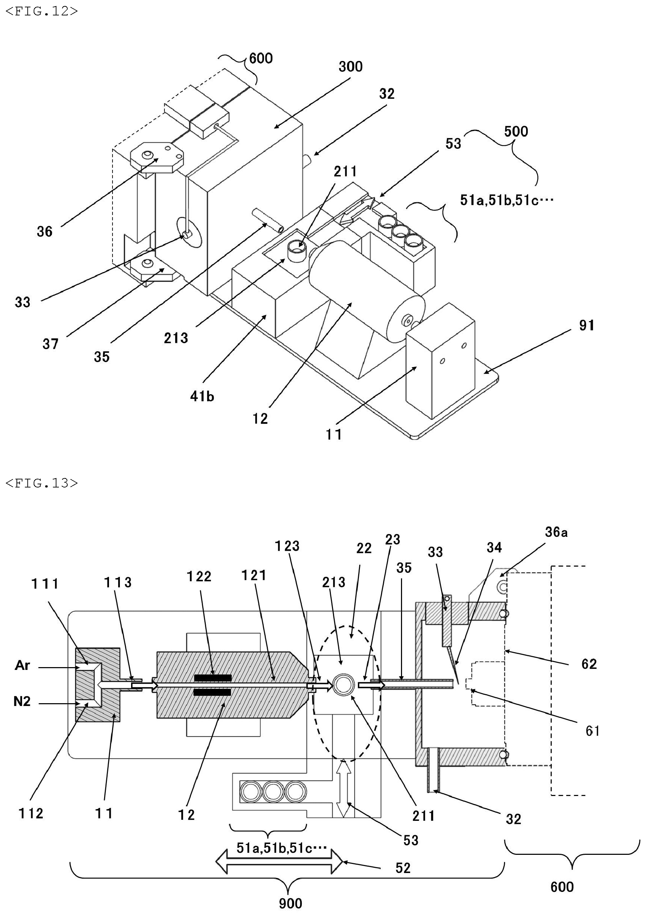

FIG. 12 is a diagram showing the configuration of FIG. 11 with the upper part of the covering member removed.

FIG. 13 is a cross-sectional view of FIG. 12, taken along a plane including the mixed gas flow channel and the sample component-containing mixed gas inlet channel.

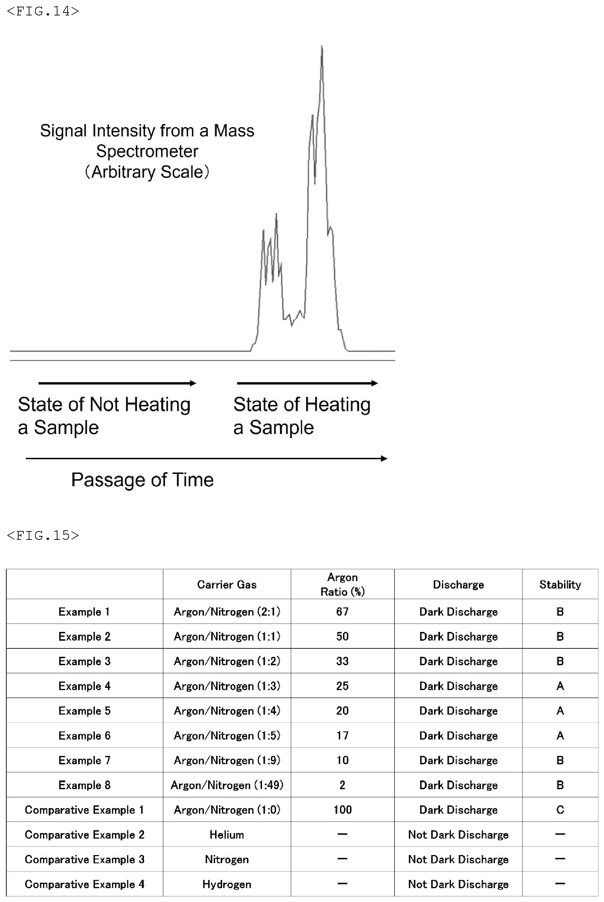

FIG. 14 shows an example of the difference in mass spectrometry signals when a sample is heated and unheated.

FIG. 15 is a table summarizing the experiments of Examples 1 to 8 and Comparative Examples 1 to 4.

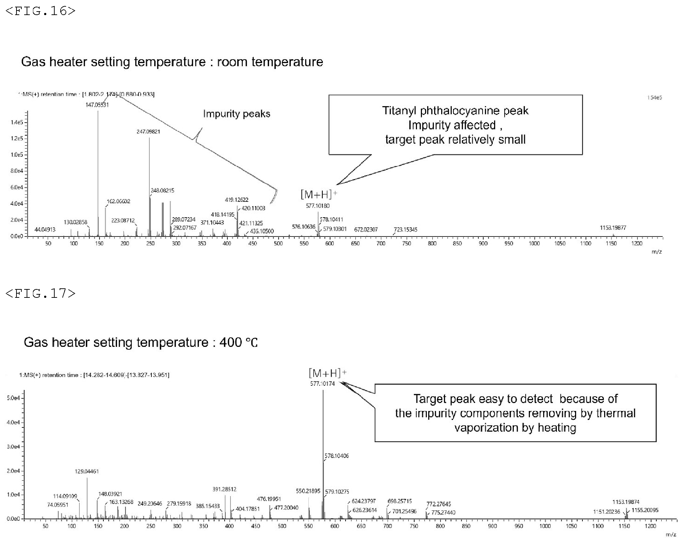

FIG. 16 shows the result of the experiment of Example 9-1.

FIG. 17 shows the result of the experiment of Example 9-2.

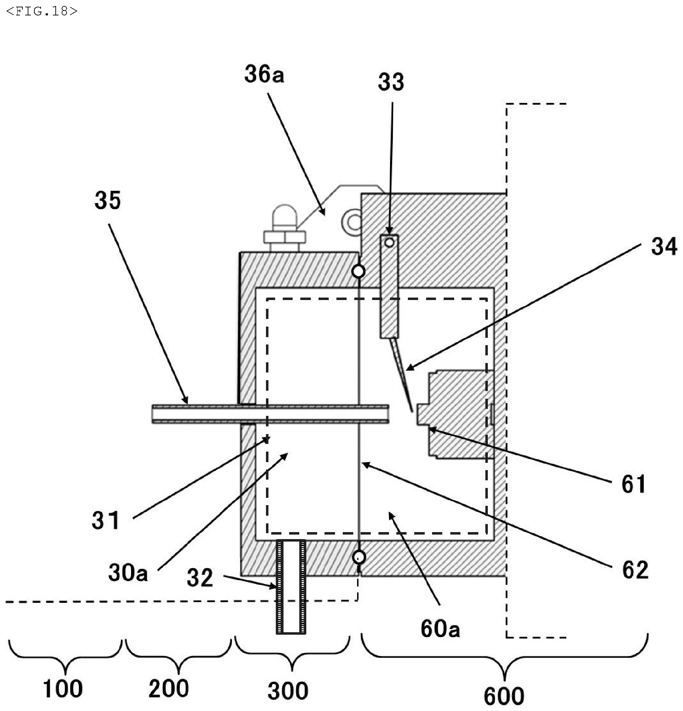

FIG. 18 shows one embodiment of an ion introduction device of the present invention mounted on a mass spectrometer equipped with a built-in voltage unit.

## ENBODIMENTS FOR CARRYING OUT THE INVENTION

The present invention is described in detail below.

In the present invention, the gas used for containing sample components and for ionizing them is referred to as carrier gas.

In the present invention, dark discharge refers to applying a low voltage to carrier gas to generate discharge that does not emit light in the visible light range. In other words, the dark discharge of the present invention refers to a state in which, when voltage is applied between a needle electrode and a counter electrode and when the current value is measured, no visible light is emitted but a stable current flows (with the current fluctuating within $\pm 50\%$ of the average current value).

The present invention is characterized by using mixed gas of argon and nitrogen as the carrier gas for sample ions. The argon and nitrogen mixed gas of the present invention refers to a state in which nitrogen gas is contained in argon. After extensive research, the inventors discovered that when a mixed gas of argon and nitrogen is used under low voltage conditions, argon can be excited without emitting light. The inventors further discovered that by using the argon and nitrogen mixed gas of the present invention, nitrogen radicals are not generated, and a stable dark discharge is maintained even in the presence of sample components, enabling continuous ionization.

In the present invention, the voltage for generating dark discharge is preferably in the range of 1.8 kV to 3.0 kV. When the voltage exceeds 3.0 kV, a discharge accompanied by light emission occurs, rather than a dark current without light emission. On the other hand, no discharge occurs when the voltage is less than 1.8 kV.

When discharge was performed using nitrogen (100 %), helium (100 %), or hydrogen (100 %), which are commonly used as carrier gases in conventional atmospheric pressure ionization methods, no dark discharge occurred. Furthermore, when discharge was performed using argon (100 %) as the carrier gas, the dark discharge was unstable.

In the present invention, to ionize sample components by dark discharge, the current must be set to between 0.1 $\mu$A and 1.0 $\mu$A. If the current is less than 0.1 $\mu$A, no dark discharge occurs, and if the current is greater than 1.0 $\mu$A, the dark discharge becomes unstable. In other words, the current value when dark discharge is maintained stably is between 0.1 $\mu$A and 1.0 $\mu$A.

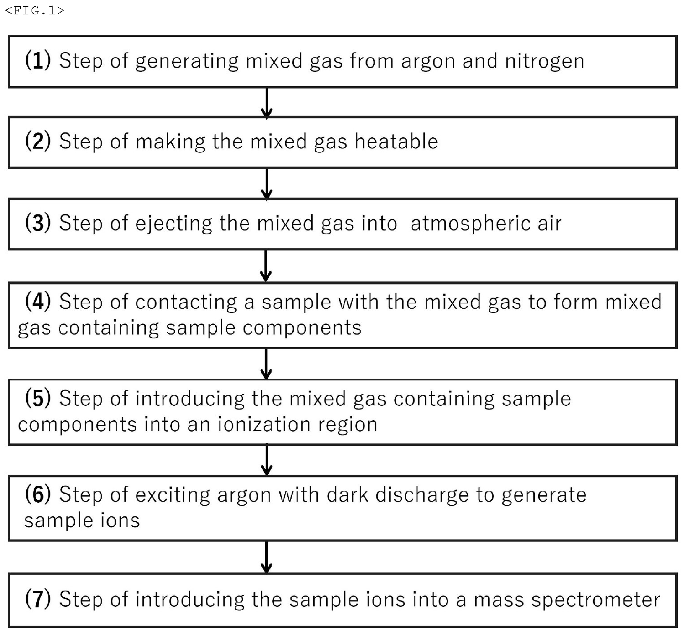

The steps of the present invention are explained using FIG. 1. FIG. 1 is a simplified process diagram illustrating the ion introduction method of the present invention for introducing ions into a mass spectrometer. First, (1) mixed gas consisting of argon and nitrogen is generated. (2) The mixed gas is heated as necessary. Next, (3) this room temperature or heated mixed gas is ejected into moisture-containing atmosphere. Furthermore, (4) a sample placed in the moisture-containing atmosphere is contacted with the ejected mixed gas to form mixed gas containing sample components. (5) The sample component-containing mixed gas is introduced into an ionization region under reduced pressure. (6) In the ionization region, argon in the sample component-containing mixed gas is excited by dark discharge without light emission under reduced pressure, and sample ions are generated from the sample components through the intervention by the excited argon and moisture. Thereafter, (7) the mixed gas containing the sample ions is introduced into a mass spectrometer, where the mass is measured.

In the present invention, sample ionization requires atmospheric moisture, which is involved in the reaction. Therefore, the sample must be placed in an atmospheric environment containing moisture. Atmospheric moisture is considered to be present in sufficient amounts in a typical laboratory environment (humidity 20-85 %). This is evident from the practical use of conventional atmospheric pressure (ambient) ionization methods. Any environment in which these ionization methods can be applied is sufficient.

The "sample" in this invention can be in any state, including solid, liquid, or gas, as long as it generates ions measurable by a mass spectrometer. Metal complexes such as titanyl phthalocyanine, which have been difficult to measure using conventional methods, are particularly acceptable. Furthermore, the sample can essentially be placed over gas mixture without any pretreatment.

In this invention, the "sample component" refers to a component generated by contact of the sample with the gas mixture, and includes any state of the sample, such as vaporized, atomized, transformed into droplets, or transformed into fine particles.

In the present invention, nitrogen gas is present in the mixed gas. However, unlike the nitrogen excitation type (100 % nitrogen) ionization process, argon is excited in the ionization region with lower excitation energy than that used to excite nitrogen molecules. The excited argon ionizes water molecule clusters in the atmosphere. These water molecule cluster ions efficiently ionize the sample, suppressing the generation of byproducts derived from nitrogen radicals. Therefore, in the present invention, the generation of sample fragments (decomposition components) is suppressed, enabling soft and efficient ionization of samples that were previously difficult to measure.

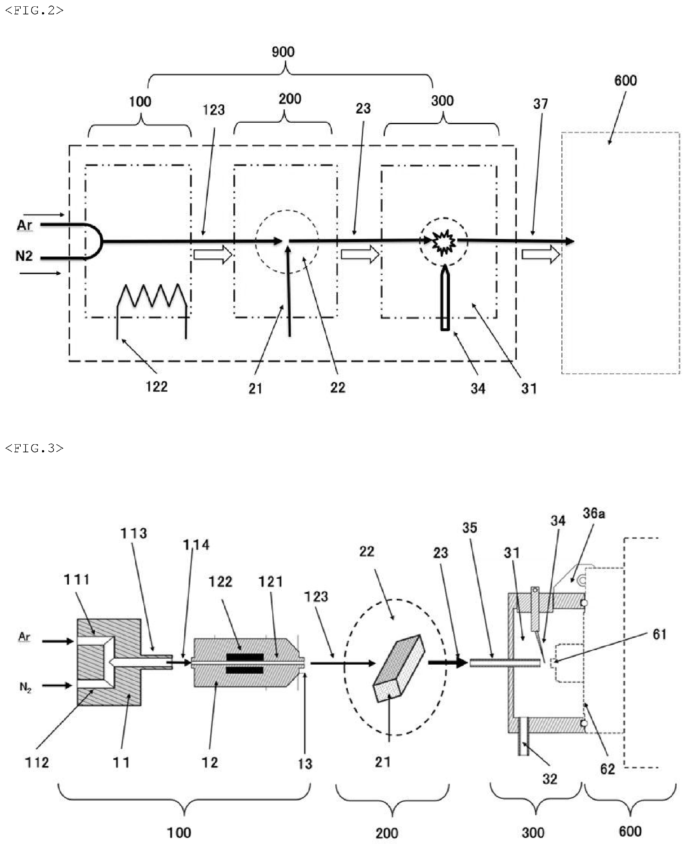

FIG. 2 is a schematic diagram of an ion introduction device for introducing ions into a mass spectrometer according to the present invention. The ion introduction device includes a mixed gas generation unit 100 for performing the steps (1) and (2), a sample supply unit 200 for performing the step (4), and an interface unit 300 for performing the step (6). Components 100, 200, and 300 are integrated to form an ionization unit 900. The means for achieving the step (6) in the interface unit 300 is also referred to as ionization means (hereinafter the same).

The mixed gas generation unit 100 includes a mixed gas generation means 11 that mixes argon and nitrogen and a gas heating means 12 that heats the mixed gas. The mixed gas generation means 11 introduces argon gas and nitrogen gas to generate mixed gas of argon and nitrogen (hereinafter referred to as "mixed gas"). The gas heating means 12 makes the mixed gas heatable. A heater 122 can be used to heat the gas. The generated mixed gas 123 is ejected from the mixed gas generation unit 100, heated or unheated, and sent to the sample supply unit 200.

In the sample supply unit 200, the mixed gas 123 comes into contact with the sample 21 in the ambient atmosphere 22 to generate sample components. The mixed gas 123 is then mixed with the sample components 21 and the ambient atmosphere 22 to form the sample component-containing mixed gas 23. The sample component-containing mixed gas 23 is then sent to the interface unit 300.

The interface unit 300 is provided with an ionization region 31, in which a voltage is applied to the discharge electrode 34 to generate dark discharge. The dark discharge excites only argon in the sample component-containing mixed gas 23, and the excited argon ionizes the sample via water molecule clusters. The sample ion-containing mixed gas 37 containing the ionized sample components is sent to the mass spectrometer 600, where the mass is measured.

FIG. 3 is a simplified diagram illustrating one embodiment of the present invention of an ion introduction device for introducing ions into a mass spectrometer. In FIG. 3, the ion introduction device, like that shown in FIG. 2, includes a mixed gas generation unit 100 for performing the steps (1) and (2), a sample supply unit 200 for performing the step (4), and an interface unit 300 for performing the step (6). In FIG. 3, the mixed gas flow channel 121 and the sample component-containing mixed gas inlet channel 35 are shown in cross section, and the surrounding structure is also shown in cross section. Also in FIG. 3, the interface unit 300 and the outer wall surface of the mass spectrometer 600 form the ionization region 31. The outer wall surface 62 of the mass spectrometer 600, which forms the ionization region 31, is provided with an ion transfer port 61 of the mass spectrometer 600.

The mixed gas generation unit 100 of the present invention is configured (although not limited to) at least to include a mixed gas generation means 11 for mixing argon and nitrogen to generate mixed gas, and further includes a mixed gas heating means 12 for heating the mixed gas as needed.

When using 100 % argon gas for discharge, dark discharge can be generated, but maintaining the dark discharge state is difficult and unstable. One possible cause of this is that, when using 100 % argon gas, the volatilized sample can change the conductivity near the electrode, reducing electrical resistance and causing an overcurrent, making it impossible to maintain the dark discharge state. In the present invention, a mixture of argon and nitrogen is used as the carrier gas. Using the mixture of argon and nitrogen as the carrier gas allows for stable dark discharge and continuous ionization of sample components.

In FIG. 3, the mixed gas generation means 11 simply needs to be capable of mixing argon and nitrogen, and is equipped with at least an argon gas inlet channel 111, a nitrogen gas inlet channel 112, and an argon and nitrogen mixed gas outlet channel 113. A simple example is a T-shaped, V-shaped, or U-shaped tube made from a combination of resin tubing, typically polytetrafluoroethylene (PTFE), and metal piping.

Mixed gas 114, generated by mixing argon gas and nitrogen gas, is sent from the mixed gas outlet channel 113 to the mixed gas flow channel 121. Mixed gas heating means 12 is provided in the mixed gas flow channel 121. In the mixed gas heating means 12, a heater 122 is disposed around the mixed gas flow channel 121, allowing the mixed gas to be heated as needed. The mixed gas, whether heated or not, is ejected from the mixed gas outlet 13 to the sample supply unit 200 as mixed gas 123.

In the mixed gas of argon and nitrogen of the present invention, argon is mixed in a volume ratio ranging from 2 % to 67 %. To obtain stable dark discharge, a volume ratio of 10 % to 30 % is preferable. However, to maintain stable dark discharge regardless of the atmosphere or sample, a volume ratio of 17 % to 25 % is particularly preferable. The volume ratio of argon is adjusted by controlling the flow rate. Using this argon and nitrogen mixed gas 123 maintains stable dark current discharge and enables continuous ionization.

The flow rates of argon and nitrogen can be adjusted and controlled using standard pressure regulators and are not particularly limited. For precise control based on various conditions, such as the state of the sample and the atmosphere in the sample supply system (described below), well-known gas flow meters can also be used. The flow rates of argon and nitrogen are displayed on the flow meters, and the displayed flow rates can be adjusted using needle valves. The argon and nitrogen mixed gas 114 thus produced is ejected from the mixed gas outlet channel 113 and introduced into the sample supply unit 200 as the mixed gas 123 via the mixed gas flow channel 121. The flow rate of the mixed gas 114 is determined in relation to the pressures of the sample supply unit 200, which will be described later, (almost atmospheric pressure), the ionization region 31 (which is maintained at a negative pressure relative to the sample supply unit 200 by an exhaust system provided in communication with the ionization region 31), and the mass spectrometer 600 (which is maintained at an even reduced pressure by an exhaust system of the main body of the device).

In FIG. 3, the mixed gas 123 discharged from the mixed gas generation unit 100 to the sample supply unit 200 comes into contact with the sample in the sample supply unit 200 to form a sample component-containing mixed gas 23. The sample component-containing mixed gas 23 is introduced into the ionization region 31 via the sample component-containing mixed gas inlet path 35. The ionization region 31 is equipped with a discharge electrode 34 and an exhaust port 32 connected to an external exhaust system. The atmosphere within the ionization region 31 is exhausted and controlled to a predetermined pressure by the external exhaust system connected to the exhaust port 32. The atmosphere within the sample supply unit 200 is open to the atmosphere and is maintained at approximately atmospheric pressure. Therefore, the pressure within the ionization region 31 and the pressure within the sample supply unit 200 have the following relationship:

Pressure in sample supply unit 200 > Pressure in ionization region 31

Meanwhile, the internal pressure of the mass spectrometer 600 itself is regulated by the exhaust system of the same device itself. The gas suction speed (exhaust speed) of a typical mass spectrometer 600 varies depending on the instrument, but is approximately 0.5 to 5 L/min. By connecting a separate vacuum exhaust unit, the suction speed can be increased by approximately 10 L/min. The pressure within the ionization region 31 is always kept higher than the pressure within the mass spectrometer 600, maintaining the following relationship:

Pressure within the ionization region 31 > Pressure within the mass spectrometer 600

This pressure relationship allows sample ions to naturally flow from the ionization region 31 into the mass spectrometer 600.

Therefore, the following relationship holds between the sample supply unit 200, the interior of the ionization region 31, and the interior of the mass spectrometer 600:

Pressure in the sample supply unit 200 > Pressure within the ionization region 31 > Pressure within the mass spectrometer 600

The flow rate of the sample component-containing mixed gas 23 introduced into the ionization region 31 also affects the pressure within the ionization region 31. The flow rate of the sample component-containing mixed gas 23 depends on the flow rate of the mixed gas 123 discharged to the sample supply unit 200. If the flow rate of the mixed gas 123 is lower than the specified range, sensitivity decreases. This is because the sample components are not sufficiently mixed with the mixed gas 123 in the sample supply unit 200 and are diluted by the surrounding atmospheric air 22. On the other hand, if the flow rate of the mixed gas 123 exceeds the specified range, sensitivity also decreases. This is because, under these conditions, the sample component-containing mixed gas 23 reaches the sample component-containing mixed gas inlet 35 before the sample components are sufficiently mixed with the atmospheric air 22, which contains moisture. This prevents sufficient mixing of the moisture and the sample, which are essential for ionization. Furthermore, the excess gas overpressures the ionization region 31, placing a strain on the vacuum state of the mass spectrometer 600. This excess gas also shortens the life of the mass spectrometer.

In the present invention, the mixed gas generation unit 100 can be provided with a gas heating means 12. This makes it possible to heat the argon and nitrogen mixed gas 114 as needed. The gas heating means 12 can be, for example, a heater 122 provided around the mixed gas flow channel 121. Specifically, the mixed gas flow channel 121 can be made of metal piping and surrounded by a ceramic heater, enabling heating.

In fact, differences in mass spectrometry results were observed between a case where the mixed gas was not heated without using the heater 122 of the gas heating means 12 and a case where the argon and nitrogen mixed gas was heated using the heater 122. As a result, when the mixed gas was heated, the peaks of impurities were reduced, and the peaks of the target substance were relatively easier to see, improving analytical sensitivity compared to when the mixed gas was not heated. (This will be described later in Examples 9-1 and 9-2.)

When heating a mixed gas in the present invention, the set temperature of the heater 122 can typically be set in the range of 10 °C to 600 °C (although not particularly limited). To maximize the effect of heating the carrier gas, it is preferable to heat the carrier gas above room temperature. For example, it is set in the range of 50 °C to 500 °C. Furthermore, taking into account factors such as the heater's lifespan, it is particularly preferable to set it in the range of 100 °C to 450 °C.

In the sample supply unit 200 of the present invention, the sample is supplied as follows. That is, in the case of a gas sample, it can be supplied from the outside using a tube of appropriate diameter and is directly mixed with the mixed gas 123 and the air atmosphere 22. In the case of liquid and solid samples or mixtures thereof, the sample can be applied to the tip of a glass rod and placed in the flow path of the mixed gas 123, but this is not particularly limited. For example, the sample can be continuously supplied from the outside using a capillary (narrow tube).

Also, for liquid or solid samples, a container can be placed in air atmosphere 22 within the sample supply unit 200 and exposed to the atmospheric environment. The sample in the container is vaporized, atomized, or transformed into droplets or fine particles by the flow of heated or unheated mixed gas 123 to generate sample components. The sample components are mixed with the mixed gas 123 and the air atmosphere 22 to generate sample component-containing mixed gas 23. Furthermore, the generation of sample components can be promoted by heating the container.

FIG. 4 is a diagram showing another embodiment of the ion introduction device of the present invention. FIG. 4 clarifies the positional relationship between the mixed gas generation unit 100 (equipped with a mixed gas generation means 11 and a gas heating means 12), the sample supply unit 200, the interface unit 300, and the mass spectrometer 600. Furthermore, FIG. 4 shows the case where a sample stage 212 and a sample container 211 are arranged in the sample supply unit 200.

In FIG. 4, the mixed gas generation unit 100, sample supply unit 200, and interface unit 300 are mounted on a base 91. As a result, the units 100, 200, and 300 are integrally configured to form the ionization unit 900. Furthermore, FIG. 4 also schematically illustrates a mass spectrometer 600. Note that in the following figures, the entire mass spectrometer 600 is not shown, but only its essential parts are illustrated. In FIG. 4, the ionization unit 900 is attached to the mass spectrometer 600 using hinges 36a and 36b.

FIG. 5 is a cross-sectional view of FIG. 4, taken along a plane including the mixed gas flow channel 121 in the mixed gas generation unit 100 and the sample component mixed gas inlet path 35 provided in the interface unit 300. In FIG. 5, the mixed gas flow channel 121 and the sample component-containing mixed gas inlet path 35 are shown in cross section, and the surrounding structure is also shown in cross section. In FIG. 5, an ion transfer port 61 of the mass spectrometer 600 is disposed on an outer wall surface 62 of the mass spectrometer 600, and the surface 62 of the mass spectrometer and the interface unit 300 form an ionization region 31.

The mixed gas generation unit 100 in FIG. 5 includes a mixed gas generation means 11 and a gas heating means 12. The gas heating means 12 further includes a heater 122 that can heat the mixed gas. FIG. 5 also shows the relative positions of the sample stage 212 and sample container 211 in the sample supply unit 200.

A mixed gas 123 is ejected from the mixed gas generation unit 100 to the sample supply unit 200 via the mixed gas flow channel 121. The ejected mixed gas 123 comes into contact with the sample in the sample container 211, producing sample components that make up the sample. The sample components are mixed with the mixed gas 123 and the air atmosphere 22 to form a sample component-containing mixed gas 23. The sample component-containing mixed gas 23 is introduced into the ionization region 31 via the sample component-containing mixed gas inlet path 35.

When using a liquid, solid, or mixture thereof as the sample, the sample container 211 in FIG. 5 can be used. The sample is placed in the sample container 211 and placed on the sample stage 212 provided in the sample supply unit 200. The sample in the sample container 211 is vaporized, atomized, or transformed into droplets or fine particles depending on the flow and temperature of the mixed gas 123, generating sample components. The sample components are mixed with the mixed gas 123 and the air atmosphere 22 to generate a sample component-containing mixed gas 23. The sample container 211 can be any commonly used resin or metal container capable of holding a liquid or solid sample.

As described below, the sample stage 212 can also be provided with a sample heating means to promote the vaporization, atomization, droplet formation, or fine particle formation of a liquid or solid sample. When the sample in the sample container 211 is heated by the sample heating means provided on the sample stage 212, the mixed gas 123 may be supplied at room temperature without using the gas heating means 12. Alternatively, the heated mixed gas 123 may be used in combination with the sample heating means.

FIG. 6 is a diagram showing the ion introduction device of FIG. 4 from another side. In this figure, as in FIG. 4, the mixed gas generation unit 100, sample supply unit 200, and interface unit 300 are mounted on a base 91. The base 91 integrally configures the units 100, 200, and 300 to form an ionization unit 900. The integrated ionization unit 900 is attached to the mass spectrometer 600 using a hinge 36a (and a hinge 36b, not shown).

FIG. 7 is a diagram showing the ionization unit 900 in FIG. 6 when opened and closed relative to the mass spectrometer 600. The mixed gas generation unit 100, the sample supply unit 200, and the interface unit 300 are integrated by the base 91 to form the ionization unit 900. The opening and closing of the ionization unit 900 integrated by the base 91, and the mass spectrometer 600 is indicated by the opening and closing direction 38 of the interface unit. FIG. 7 shows the interface unit 300, which constitutes the ionization unit 900, connected to the mass spectrometer 600 by hinges 36a and 36b, with the ionization region open.

FIG. 8 is a top view of the state shown in FIG. 7. FIG. 8 will be explained in detail. In FIG. 8, the interface unit 300, which constitutes the ionization unit 900, has a recess 31a. When the ionization unit 900 and mass spectrometer 600 are closed along the interface opening/closing direction 38, the outer wall surface 62 of the mass spectrometer 600 and the interface unit 300 come into contact, and the recess 31a becomes an internal space, forming the ionization region 31. FIG. 9 shows this state. Details of FIG. 9 will be described later.

In FIG. 8, the interface unit 300 is made of a metal member, preferably an aluminum member that is lightweight and has good conductivity, and is connected to the outer wall surface 62 of the mass spectrometer 600 with a conductive member. Connecting the interface unit 300 to the outer wall surface 62 via the conductive member ensures a reliable electrical connection between the interface unit 300 and the outer wall surface 62.

In FIG. 8, the recess 31a of the interface unit 300 is typically a roughly cylindrical space, and an exhaust port 32 communicating with an external exhaust system and a voltage unit 33 for dark discharge are provided in the side area of the roughly cylindrical shape. The interface unit 300 further includes a sample component-containing mixed gas inlet path 35 on the bottom side, opposite side of the mass spectrometer 600, of the roughly cylindrical recess 31a. In FIG. 8, the recess 31a communicates with the sample supply unit 200 under atmospheric conditions via the sample component-containing mixed gas inlet path 35.

FIG. 9 shows the ionization region 31 formed by closing the ionization unit 900 and the mass spectrometer 600 in the opening/closing direction 38 in FIG. 8. In FIG. 9, the ionization region 31 is hatched to clearly show it. The interface unit 300 integrated with the ionization unit 900 includes a sample component-containing mixed gas inlet path 35 and an exhaust port 32 communicating with an external exhaust system.

In FIG. 9, the ionization region 31 must be sealed by the surface where the interface unit 300 and the outer wall surface 62 of the mass spectrometer 600 touch each other. The sealing method is not particularly limited; for example, both surfaces can be sealed via O-rings. The material of the O-ring is not particularly limited. In the state shown in FIG. 9, the ionization region 31 becomes an electromagnetically shielded space, allowing dark discharge to occur without being affected by the outside world. The most convenient conductive members are the hinges 36a and 36b. Because the ionization region 31 is located in close proximity to the mass spectrometer 600, measures must be taken to prevent contamination of the mass spectrometer 600. Therefore, the ionization region 31 must be kept clean by an external exhaust system connected via the exhaust port 32.

The size and shape of the ionization region 31 vary depending on the shape of the mass spectrometer 600 to be combined with it, but as mentioned above, a compact size is required to create a clean region. Typically, the roughly cylindrical space of the recess 31a shown in FIG. 8 has an inner diameter of the cylindrical bottom of 80 mm to 100 mm, and a depth (i.e., cylindrical height) of approximately 50 mm to 80 mm. The internal volume of the space formed as a result of combination is approximately 200 to 600 x $10^3$ mm$^3$.

In FIG. 9, the ionization region 31 is isolated from the outside air except for the following: it is connected to the sample supply unit 200 (under atmospheric environment) via the sample component-containing mixed gas inlet path 35; it is connected to the mass spectrometer 600 main body via the ion transfer port 61 of the mass spectrometer; and it is connected to an external exhaust system via the exhaust port 32. The ionization region 31 is evacuated at a flow rate of approximately 1 to 40 L/min, ideally approximately 10 L/min, by an external exhaust system connected to the exhaust port 32 provided in the interface unit 300. This exhaust maintains the ionization region 31 at a negative pressure of approximately 1 to 70 kPa below atmospheric pressure, ideally approximately 10 kPa below. The external exhaust system can use any known exhaust means and is not particularly limited. For example, the ionization region is evacuated using a diaphragm pump or the like.

The atmospheric environment 22 of the sample supply unit 200 is approximately atmospheric pressure. In contrast, the ionization region 31, which is evacuated by the external exhaust system, is at a pressure negative relative to atmospheric pressure. This pressure differential with atmospheric pressure allows the sample component-containing mixed gas 23 formed in the sample supply unit 200 to be introduced into the ionization region 31. Furthermore, exhaust by the external exhaust system maintains the pressure in the ionization region 31 at a pressure negative relative to the air atmosphere 22 (approximately 1 to 70 kPa) but higher than the pressure in the mass spectrometer 600. This maintains a stable airflow from the mixed gas generation unit 100 → sample supply unit 200 → ionization region 31 → mass spectrometer 600. In other words, the pressures in each section maintain the following relationship:

```
Sample supply unit 200 > ionization region 31 > mass spectrometer
600
```

The dark discharge of the present invention will be explained using FIG. 5. In FIG. 5, a discharge electrode 34 (for dark discharge) is provided at the tip of the voltage unit 33 installed in the ionization region 31. Argon in the sample component-containing mixed gas 23 introduced into the ionization region 31 is excited by dark discharge. The excited argon interacts with moisture in the sample component-containing mixed gas 23 to ionize the sample components in the sample component-containing mixed gas 23.

In the ionization region 31 shown in FIG. 5, the discharge electrode 34 (for dark discharge) is positioned between the sample component-containing mixed gas inlet 35 (from the sample supply unit 200) and the ion transfer port 61 of the mass spectrometer 600. In FIG. 5, the ion transfer port 61 serves as a counter electrode to the discharge electrode 34. A voltage is applied between the ion transfer port 61, which serves as the counter electrode, and the discharge electrode 34 to generate dark discharge. The ion transfer port 61, which serves as the counter electrode for the dark discharge, is maintained at the same potential as the interface unit 300 and the outer wall surface 62 of the mass spectrometer 600 via a conductive member, preventing any electromagnetic phenomena other than those mentioned above.

A needle-shaped metal material is used for the discharge electrode 34. It is desirable for this material to be easy to shape the needle tip, have little wear due to dark discharge, and be highly durable. In the present invention, a needle-shaped stainless steel material is used.

It is undesirable for currents other than discharge (leak currents) to occur between the discharge electrode 34 and the counter electrode 61. For this reason, the discharge electrode 34 must be covered with an insulator except for its tip. This insulator should have high insulating properties, not generate decomposition products even at high voltages, and be resistant to charge-up. For example, resin materials such as silicone, polyimide, and PEEK (polyether ether ketone) are desirable.

The dark discharge of the present invention is performed at a lower voltage than conventional atmospheric pressure ionization methods. That is, by using a low voltage and a mixture of argon and nitrogen as the carrier gas, stable dark discharge can be maintained even in the presence of sample components.

The voltage required for dark discharge, i.e., discharge without luminescence, is lower than the voltage required for conventional discharge with luminescence. Even in mixed gas of argon and nitrogen, when the voltage required for dark discharge is applied, the dark discharge excites only argon and does not produce nitrogen radicals. Furthermore, in the present invention, it has been discovered that when the mixed gas of argon and nitrogen is used, stable dark discharge can be maintained even in the presence of sample components. The applied voltage is not particularly limited as long as it is within a range in which dark discharge is stable, but it is typically applied in the range of 1.8 kV to 3.0 kV. Above 3.0 kV, a discharge accompanied by luminescence rather than dark discharge occurs, and below 1.8 kV, the discharge is unstable.

In FIG. 5, the strength of the electric field generated from the tip 34a of the discharge electrode 34 of the dark discharge of the present invention contributes to the generation of dark discharge. The electric field strength varies depending on the tip shape of the discharge electrode 34, the distance between the counter electrode 61 and the tip of the discharge electrode 34, the orientation (angle) of the tip of the discharge electrode relative to the counter electrode 61, and the voltage applied to the discharge electrode. By adjusting these conditions and applying the aforementioned voltage (1.8 kV or more to 3.0 kV or less), a stable dark discharge without light emission can be maintained. (Note that the counter electrode 61 is typically grounded.).

Another embodiment of a mass spectrometer 600 includes a voltage unit. An example is shown in FIG. 18. In FIG. 18, a recess 60a is formed from the outer side surface 63 of the mass spectrometer 600 toward the ion transfer port 61 of the mass spectrometer 600, and the ion transfer port 61 and one end of the voltage unit 33 are located within the recess 60a. These arrangements are shown in cross section. The voltage unit 33 is connected to an electrical circuit (not shown) of the mass spectrometer 600 so that a voltage can be applied.

In FIG. 18, a discharge electrode 34 is attached to one end of the voltage unit 33 within the recess 60a. Meanwhile, the interface unit 300 of the present invention includes a sample component-containing mixed gas inlet path 35 and an exhaust port 32 communicating with an external exhaust system, and is shown cut at the inlet path 35 and the exhaust port 32. The interface unit 300 also forms a recess 31a. Note that the mixed gas generation unit 100 and sample supply unit 200 of the present invention are not shown in FIG. 18.

In FIG. 18, the interface unit 300 is connected to the mass spectrometer 600 by a hinge 36a and a hinge 36b (not shown). When the interface unit 300 and the mass spectrometer 600 are positioned facing each other via the hinges 36a and 36b, the recess 31a on the interface unit 300 side and the recess 60a on the mass spectrometer side face each other and are sealed to form the ionization region 31. In FIG. 18, the ionization region 31 is indicated by a dashed line.

To form the ionization region 31, the recess 31a of the interface unit 300 is designed to fit the size of the opening of the recess 60a of the mass spectrometer.

The ion introduction device of the present invention in FIG. 18 has the advantage that it does not require a voltage unit to be installed in the interface unit and can utilize the power supply of the mass spectrometer. Furthermore, the ion introduction device of the present invention in FIG. 18 can adopt the configurations of the mixed gas generation unit 100 and sample supply unit 200, both of which are not shown.

In the present invention, a heating means for heating the sample can be provided to promote the generation of sample components from the sample, i.e., to promote the vaporization, atomization, droplet formation, and fine particle formation of the sample.

FIG. 10 shows an embodiment in which a heating plate 213 is provided on the stage on which the sample container 211 is placed. That is, FIG. 10 is a diagram of the configuration of FIG. 4, in which the heating plate 213 also serves as the sample stage for the sample container 211.

In FIG. 10, when the sample container 211 is heated, a heat-resistant metal container is used as the sample container 211. The sample container 211 is heated by placing it on the heating plate 213. Various types of heating plate 213 can be used, such as a resistance heater or an infrared heater. In FIG. 10, a heating plate made of a resistance heater is used because of its simple structure and ease of temperature control and sample replacement, which will be described later. Heating means other than a plate, such as laser heating, can also be used.

Furthermore, instead of directly heating the sample container 211 with the heating plate 213, it is also possible to heat the sample container by incorporating a heating means inside the sample container support. In FIG. 10, from the perspective of thermal efficiency, a flat resistance heater is used as the heating plate 213, and the sample container 211 is placed directly on the heating plate 213 for heating.

In FIG. 10, the sample container 211 is placed on the heating plate 213. The sample in the sample container 211 is heated by applying a voltage to the heating plate 213. The temperature rise rate of the resistance heater used as the heating plate 213 is preferably in the range of 30 to 300 °C/min. The maximum temperature of the resistance heater is set to 600 °C.

FIG. 14 shows an example of mass spectrometry of solid and liquid samples that are difficult to vaporize or sublimate at room temperature. That is, FIG. 14 shows an example of the difference in signals from a mass spectrometer when the sample is not heated and when it is heated.

In FIG. 10, the time passage of the mass spectrometer signal was observed when a solid sample of titanyl phthalocyanine was placed in the sample container 211 and room-temperature (i.e., unheated) mixed gas was ejected into the atmosphere of the sample supply unit 200. When the mixed gas was flowing without heating the sample container 211, no signal was observed. In other words, no sample ions derived from the sample components were present in the mass spectrometer 600. Next, when the sample container 211 was heated, a signal began to be observed. In other words, sample ions derived from the sample components were introduced into the mass spectrometer 600.

FIG. 14 is a schematic diagram showing the time passage of the mass spectrometric signal at this time. The horizontal axis of FIG. 14 represents the time passage from when the sample container was not heated to when it was heated. The vertical axis represents the mass spectrometric signal of sample ions derived from the sample components. That is, it was found that the sample components are not present in the ambient atmosphere when a solid sample of titanyl phthalocyanine is not heated, and they are generated in the ambient atmosphere by heating, In other words, by heating a sample using the heating plate 213 and sample container 211 of the present invention, it is possible to analyze samples that cannot be mass analyzed at room temperature, particularly refractory solid or liquid samples that are difficult to vaporize or sublimate at room temperature.

Note that when heating a sample, as described above, it is possible to form the sample component-containing mixed gas 23 by contacting the unheated, room-temperature mixed gas 123 with the sample. However, better data can be obtained by contacting the heated mixed gas 123 with the sample to form the sample component-containing mixed gas 23.

FIG. 11 shows the configuration of FIG. 10, further equipped with covering members 41a and 41b and a sample container exchange mechanism 500. That is, FIG. 11 shows the sample supply unit 200 equipped with covering members 41a and 41b and a sample container exchange mechanism 500.

In FIG. 11, the sample supply unit 200 is provided with covering members 41a and 41b that cover the heating plate 213. The lower covering member 41b also serves as a support for the heating plate 213. The lower covering member 41b is placed on a base 91. The upper covering member 41a is detachable from the lower covering member 41b. The upper covering member 41a covers the heating plate 213 and sample container 211 when heating the sample (when applying voltage to the heating plate 213). The upper covering member 41a can be removed from the sample supply unit 200 to perform the work, such as when replacing the sample container 211 or when arranging the aforementioned sample tube or glass capillary.

By providing the covering members 41a and 41b, diffusion of the mixed gas, sample components, and sample component-containing mixed gas 23 in the sample supply unit 200 can be suppressed. This also relieves the effects of temperature changes and air currents around the device, allowing for stable data to be obtained. It also prevents the experimenter from coming into contact with the heating area during sample heating.

When replacing the sample container 211, as described above, the upper covering member 41a can be removed for this operation. However, a means for sequentially supplying multiple samples in an exchangeable manner can also be provided. This embodiment is shown in FIG. 12.

FIG. 12 shows the state of FIG. 11 with the upper covering member 41a removed. FIG. 12 more clearly illustrates the positional relationship between the heating plate 213 and the sample container exchange mechanism 500. Multiple samples are stored in multiple separate sample containers 51a, 51b, 51c, etc., and are arranged, for example, in a single row along the sample container arrangement direction 52. The multiple sample containers 51a, 51b, 51c, etc. are made of the same shape and material for ease of sample handling.

FIG. 13 is a cross-sectional view of FIG. 12 taken along a plane including the mixed gas flow channel 121 and the sample component-containing mixed gas inlet path 35. FIG. 13 also shows the mixed gas generating means 11, mixed gas heating means 12, and interface unit 300 in cross section. FIG. 13 shows an example of the sample container exchange mechanism 500 in more detail. In this example, a sample container arrangement direction 52 in which the multiple sample containers 51a, 51b, 51c, etc. are arranged intersects with a sample supply/remove direction 53 for replacing the sample containers by placing them on or removing them from the heating plate.

The sample container exchange mechanism 500 will be explained using FIG. 13. Among the multiple sample containers arranged in a row along the sample container arrangement direction 52 on the sample container exchange mechanism 500, the sample container 51a closest to the heating plate is moved along the sample container arrangement direction 52 and then moved toward the heating plate 213 along the sample supply/remove direction 53, which intersects with the sample container arrangement direction 52. After contacting the mixed gas 123 on the heating plate 213, the sample container is moved away from the heating plate 213 along the sample supply/remove direction 53. By repeating this series of operations sequentially for the sample containers 51a, 51b, 51c, etc., the sample components of multiple samples can be sequentially ionized and introduced into the mass spectrometer.

These movements can be most easily achieved manually, but they can also be performed using a well-known mechanism (not shown). Using such a sample container exchange mechanism eliminates the need to remove the upper covering member 41a as described above when exchanging sample containers, improving the efficiency of sample handling and the overall analytical experiment.

As an example of the well-known mechanism (not shown), automatic sample container exchange is also possible. After mass spectrometry measurement or sample ionization is completed for the sample container 211 placed on the heating plate 213, it can be automatically exchanged for the next sample container 51a using a sample container exchange mechanism 500 or the like. For example, the sample container can be automatically exchanged by moving it on a rail, or by using an automatic handling arm. By repeating the automatic exchange operation sequentially for 51b, 51c, etc., multiple samples can be automatically measured consecutively.

<u>EXAMPLES</u>

The present invention will be described in more detail below with examples and comparative examples, but the present invention is not limited to these examples. Below, the results of experiments using multiple carrier gas components are shown.

[Example 1]

Mass spectrometry was performed in combination with a mass spectrometer using an ion introduction device equipped with a mixed gas generation unit, sample supply unit, and interface unit of the present invention. In Example 1 and following, the gas containing the sample components used for ionization is referred to as carrier gas, including the mixed gas. In the mixed gas generation unit, argon gas and nitrogen were introduced at flow rates of 1.7 L/min and 0.8 L/min, respectively, to generate the carrier gas. The heater temperature of the mixed gas heating means in the mixed gas generation unit was set to 400 °C, and heated carrier gas (argon : nitrogen = 2 : 1) was ejected at 2.5 L/min. In the sample supply unit, 0.5 mg of titanyl phthalocyanine sublimation-refined powder (manufactured by Tokyo Chemical Industry Co., Ltd.) was placed in the sample container, Sample Cup LF (manufactured by Frontier Labs, Inc.). The Sample Cup LF was rapidly heated to 400°C to vaporize the titanyl phthalocyanine, obtaining the sample components in the ambient atmosphere. The ionization region was evacuated at 10 L/min to maintain a negative pressure below atmospheric pressure, and carrier gas containing atmospheric moisture and sample components was introduced into the ionization region. A voltage of 2.2 kV was applied to the voltage unit installed in the interface section to ionize the sample components. The generated sample ions were transferred to the mass spectrometer via the differential pressure with the mass spectrometer, where mass spectrometry was performed. A Shimadzu LCMS-2020 mass spectrometer was used. Prior to mass spectrometry of the sample components, heated carrier gas alone was allowed to flow for 30 minutes to confirm whether the dark discharge changed between this state and the sample component analysis.

Hereinafter, "stable" means that the dark discharge can be maintained without transitioning to discharges accompanied by light emission such as corona discharge or arc discharge. This definition was used as the criterion for judging the stability of the dark discharge. Specifically, the following criteria were established:

A: Stability was maintained for 30 minutes before sample component measurement, and stability was maintained during subsequent sample component measurement.

B: Stable for 30 minutes before the sample component measurement, but became unstable during subsequent sample component measurement.

C: Unstable.

- : No dark discharge occurred.

[Examples 2-8, Comparative Examples 1-4]

Mass spectrometry was performed in the same manner as in Example 1, except that the carrier gas was changed to the carrier gas shown in FIG. 15. The flow rate of each carrier gas was 2.5 L/min. For the argon and nitrogen mixed gas, the argon flow rate was x L/min and the nitrogen flow rate was y L/min, with the ratio of x to y being as shown in FIG. 15, i.e., x + y = 2.5. The stability of dark discharge was evaluated in the experiments conducted in Examples 1-8 and Comparative Examples 1-4, and the results are summarized in FIG. 15. In other words, FIG. 15 is a table summarizing the experiments for Examples 1-8 and Comparative Examples 1-4.

Examples 1-8 and Comparative Examples 1-4 demonstrated that dark discharge occurs when carrier gas mixture of argon and nitrogen is used, and that, at a specific ratio, the dark discharge is stable both when carrier gas alone is used and when measuring sample components. On the other hand, dark discharge does not stably persist when argon alone is used. It was also revealed that dark discharge does not occur when nitrogen alone, helium, or hydrogen is used as the carrier gas. The present invention demonstrates that excitation at low voltage is possible using argon, which is more stably supplied and relatively inexpensive, instead of helium gas, which is expensive and has supply stability concerns. It was also demonstrated that a simple and inexpensive mass spectrometry system or method can be provided by using carrier gas mixture containing nitrogen, which is even cheaper than argon.

[Example 9]

An ion introduction device equipped with a mixed gas generation unit, sample supply unit, and interface unit of the present invention was combined with a mass spectrometer to conduct a mass spectrometry experiment demonstrating the effect of heating the carrier gas.

[Example 9-1]

In the mixed gas generation unit, argon gas and nitrogen were introduced at flow rates of 0.5 L/min and 2.0 L/min, respectively, to generate mixed gas. The mixed gas was ejected from the mixed gas generation unit at room temperature as carrier gas without heating. The ejection rate was 2.5 L/min, the sum of the flow rates of the component gases. In the sample supply unit, a ceramic heater was attached to the heating plate, and a Sample Cup LF was placed on it. 0.5 mg of titanyl phthalocyanine sublimation refined powder was placed in the Sample Cup LF as a sample. The temperature setting of the ceramic heater was controlled to increase from room temperature to 400 °C in 2 minutes (heating rate of 200 °C/min), obtaining the sample components. The ionization region was evacuated at a flow rate of approximately 10 L/min, and carrier gas containing the sample components was introduced into the ionization region. Voltage was applied to a needle electrode installed in the ionization region of the interface section to excite the argon in the carrier gas containing the sample components. The excitation voltage was 2.2 kV. The sample ions generated were introduced into a mass spectrometer for measurement. The mass spectrometer used was a Shimadzu LCMS-9030 (9050 upgrade). The mass analysis settings were as follows:

Positive m/z range 10-1500 The mass spectrometer was calibrated immediately before the experiment to confirm that it was in good condition. FIG. 16 shows the results of the experiment in Example 9-1. In this experiment, impurity components appeared as impurity peaks, and the parent peak of titanyl phthalocyanine was relatively low (low sensitivity).

[Example 9-2]

A mass spectrometry experiment was conducted under the same conditions as in Example 9-1, except that the mixed gas was heated to a set temperature of 400 °C in the heater installed in the mixed gas generation unit and ejected from the mixed gas generation unit as carrier gas. A sample was placed in the sample supply unit as in Example 9-1 and rapidly heated to obtain sample components. The carrier gas containing the sample components was introduced into the ionization region. The conditions of argon excitation in the ionization region and of the mass spectrometer were the same as in Example 9-1. As in Example 9-1, the mass spectrometer was calibrated immediately before the experiment to maintain good instrument condition. FIG. 17 shows the results of the experiment in Example 9-2. In this experiment, highly volatile impurities were eliminated by contact with the heated carrier gas, and only the peak of the refractory component, titanyl phthalocyanine, was strongly detected. In other words, the sensitivity (S/N ratio) of the mass spectrometry was improved.

[Example 10]

Mass spectrometry was performed in the same manner as in Example 5, except that 0.5 mg of aspartic acid powder (Sigma-Aldrich) was used as the sample. A peak (m/z = 134.1) derived from aspartic acid was clearly observed. The dark discharge stability was also rated A.

[Example 11]

Mass spectrometry was performed in the same manner as in Example 5, except that 0.5 mg of glycine powder (Sigma-Aldrich) was used as the sample. A peak (m/z = 76.1) derived from glycine was clearly observed. The dark discharge stability was also rated A.

[Example 12]

In Example 12, a glass rod was immersed in (R)-(+) limonene (Fujifilm Wako Pure Chemical Industries) as the sample, and the (R)-(+) limonene was attached to the glass rod. Mass spectrometry was performed as in Example 5, except that in the sample supply unit, (R)-(+) limonene attached to a glass rod was held over the carrier gas ejected from the mixed gas generation unit, and the vaporized (R)-(+) limonene was introduced into the ionization region through the gas inlet. A peak (m/z = 137.2) derived from (R)-(+) limonene was clearly observed. The stability of the dark discharge was rated A.

[Example 13]

Mass spectrometry was performed as in Example 12, except that a glass rod was immersed in a 0.01% acetonitrile solution of caffeine (Tokyo Chemical Industry Co., Ltd.) as the sample, and the caffeine was attached to the glass rod. A peak (m/z = 195.2) derived from caffeine was clearly observed. The stability of the dark discharge was rated A.

[Example 14]

Mass spectrometry was performed in the same manner as in Example 12, except that cholesterol (Tokyo Chemical Industry Co., Ltd.) was attached to a glass rod as the sample. A peak (m/z = 369.4) derived from cholesterol (M-HO+1) was clearly obtained. Furthermore, the dark discharge stability was rated A.

## INDUSTRIAL APPLICABILITY

The above detailed description of the present invention describes an ion introduction device and ion introduction method for introducing ions into a mass spectrometer, but the technology of the present invention is not limited thereto. In other words, the technology of the present invention can also be used as a method and device for generating ions in an atmospheric environment, and can be used in fields other than mass spectrometry.

## EXPLANATION OF SYMBOLS

100 ... Mixed gas generation unit, 11 ... Mixed gas generation means, 111 ... Argon gas inlet channel, 112 ... Nitrogen gas inlet channel, 113 ... Mixed gas outlet channel, 114 ... Mixed gas, 12 ... Gas heating means, 121 ... Mixed gas flow channel, 122 ... Heater, 123 ... Mixed gas, 200 ... Sample supply unit, 21 ... Sample, 211 ... Sample container, 212 ...

Sample stage, 213 ... Heating plate, 22 ... Air atmosphere, 23 ... Mixed gas containing sample components, 300 ... Interface unit, 31 ... Ionization region, 31a ... Recess (of interface unit), 32 ... Exhaust port, 33 ... Voltage unit, 34 ... Discharge electrode, 34a ... discharge electrode tip, 35 ... Sample component-containing mixed gas inlet path, 36a ... Upper hinge, 36b ... Lower hinge, 38 ... Opening/closing direction of interface unit, 41a ... Upper covering member, 41b ... Lower covering member, 500 ... Sample container exchange mechanism, 51a ... Sample container, 51b ... Sample container, 51c ... Sample container, 52 ... Sample container arrangement direction, 53 ... Sample supply/remove direction, 600 ... Mass spectrometer, 60a ... Recess (of mass spectrometer), 61 ... Ion transfer port of mass spectrometer, 62 ... Outer wall surface of mass spectrometer, 63 ... Outer side surface of mass spectrometer, 900 ... Ionization unit, 91 ... Base

**Claims**

1. An ion introduction device for introducing ions into a mass spectrometer,

   the ion introduction device comprising a mixed gas generation unit, a sample supply unit, and an interface unit,
   the mixed gas generation unit generating mixed gas by mixing argon and nitrogen,
   the sample supply unit provided in an atmospheric environment,
   a sample placed in the sample supply unit, and the mixed gas ejected from the mixed gas generation unit brought into contact with the sample to form mixed gas containing sample components,
   the interface unit comprising an exhaust port communicating with an external exhaust system, and in close contact with one surface of the mass spectrometer to form an ionization region,
   the ionization region maintained at a pressure lower than atmospheric pressure by the external exhaust system,
   the sample component-containing mixed gas introduced from the sample supply unit into the ionization region, and excited by dark discharge to generate sample ions, and
   the sample ions introduced from the ionization region into the mass spectrometer via an ion transfer port of the mass spectrometer.

2. The ion introduction device according to claim 1, **characterized in that** the ionization region includes a discharge electrode positioned between the ion transfer port and an inlet path for introducing the sample component-containing mixed gas from the sample supply unit, and **in that** dark discharge is generated between the discharge electrode and the ion transfer port to generate sample ions from the sample components in the sample component-containing mixed gas.

3. The ion introduction device according to claim 2, wherein the discharge electrode is covered with an insulator except for its tip.

4. The ion introduction device according to claim 2, wherein the voltage applied between the discharge electrode and the ion transfer port is 1.8 kV or more and 3.0 kV or less.

5. The ion introduction device according to claim 1, wherein the volume ratio of argon in the mixed gas generated in the mixed gas generation unit is 2% or more and 67% or less, preferably 17% or more and 25% or less.

6. The ion introduction device according to claim 1, wherein the mixed gas generation unit further includes means for heating the mixed gas.

7. The ion introduction device of claim 1, urther comprising a means for heating the sample in the sample supply unit.

8. The ion introduction device of claim 1, wherein the sample supply unit is equipped with a sample container exchange mechanism capable of accommodating a plurality of sample containers containing samples.

9. The ion introduction device of claim 8, wherein the sample container exchange mechanism is capable of automatically exchanging a plurality of sample containers in succession.

10. The ion introduction device of claim 1, wherein the ionization region is maintained at a higher pressure than the mass spectrometer, and the gas flow passes through the mixed gas generation unit, the sample supply unit, and the ionization region before entering the mass spectrometer.

11. A mass spectrometry system that ionizes a sample, introduces it into a mass spectrometer, and analyzes its mass,

the mass spectrometry system comprising a mixed gas generation unit, a sample supply unit, and an interface unit;

the mixed gas generation unit generating mixed gas by mixing argon and nitrogen;

the sample supply unit provided in an atmospheric environment;

a sample placed in the sample supply unit, and the mixed gas ejected from the mixed gas generation unit brought into contact with the sample to form mixed gas containing sample components,

the interface unit comprising exhaust port communicating with an external exhaust system, and in close contact with one surface of the mass spectrometer to form an ionization region;

the ionization region maintained at a pressure lower than atmospheric pressure by the external exhaust system;

the sample component-containing mixed gas introduced from the sample supply unit into the ionization region, and excited by dark discharge to generate sample ions; and

the sample ions introduced from the ionization region into the mass spectrometer via an ion transfer port of the mass spectrometer, thereby analyzing the mass.

12. A method for introducing ions into a mass spectrometer, comprising:

a step of mixing argon and nitrogen to generate mixed gas;

a step of ejecting the mixed gas into an atmospheric environment;

a step of contacting the mixed gas with a sample placed in the atmospheric environment to form sample component-containing mixed gas;

a step of introducing the sample component-containing mixed gas into an ionization region maintained at negative pressure below atmospheric pressure by an external exhaust system;

a step of exciting the sample component-containing mixed gas in the ionization region by dark discharge to generate sample ions; and

a step of introducing the sample ions from the ionization region into a mass spectrometer.

13. The ion introduction method according to claim 12, further comprising a step of heating the mixed gas after the step of generating the mixed gas.

14. The ion introduction method according to claim 12, further comprising a step of heating the sample placed in the atmospheric environment during the step of forming the sample component-containing mixed gas.

15. The ion introduction method according to claim 12, wherein the step of forming the sample component-containing mixed gas includes a sample exchange step of exchanging the sample that has been contacted with the mixed gas for a sample that has not been contacted with the mixed gas, in the atmospheric environment.

16. The ion introduction method according to claim 15, wherein the sample exchange step exchanges the contact-treated sample for an untreated sample using a mechanism for automatically exchanging multiple samples.

17. An ionization device for ionizing a sample,

the ionization device comprising a mixed gas generation unit, a sample supply unit, and an interface unit,

the mixed gas generation unit generating mixed gas by mixing argon and nitrogen,

the sample supply unit provided in an atmospheric environment,

a sample placed in the sample supply unit, and the mixed gas ejected from the mixed gas generation unit brought into contact with the sample to form mixed gas containing sample components,

the interface unit comprising an ionization region into which the sample component-containing mixed gas is introduced from the sample supply unit, and

the sample component-containing mixed gas excited by dark discharge in the ionization region to generate sample ions.

18. A method for ionizing a sample, comprising:

a step of mixing argon and nitrogen to generate mixed gas;

a step of ejecting the mixed gas into an atmospheric environment;

a step of contacting the mixed gas with a sample placed in the atmospheric environment to form mixed gas containing sample components;

a step of introducing the mixed gas containing sample components into an ionization region; and

a step of exciting the mixed gas containing sample components in the ionization region by dark discharge to generate sample ions.

<FIG.1>

| (1) Step of generating mixed gas from argon and nitrogen |
| :-- |

↓

| (2) Step of making the mixed gas heatable |
| :-- |

↓

| (3) Step of ejecting the mixed gas into  atmospheric air |
| :-- |

↓

| (4) Step of contacting a sample with the mixed gas to form mixed gas containing sample components |
| :-- |

↓

| (5) Step of introducing the mixed gas containing sample components into an ionization region |
| :-- |

↓

| (6) Step of exciting argon with dark discharge to generate sample ions |
| :-- |

↓

| (7) Step of introducing the sample ions into a mass spectrometer |
| :-- |

<FIG.2>

<FIG.3>

<FIG.4>

<FIG.5>

<FIG.6>

<FIG.7>

<FIG.8>

<FIG.9>

<FIG.10>

<FIG.11>

<FIG.12>

<FIG.13>

<FIG.14>

Signal Intensity from a Mass
Spectrometer
(Arbitrary Scale)

State of Not Heating
a Sample

State of Heating
a Sample

Passage of Time

<FIG.15>

| | Carrier Gas | Argon Ratio (%) | Discharge | Stability |
|---|---|---|---|---|
| Example 1 | Argon/Nitrogen (2:1) | 67 | Dark Discharge | B |
| Example 2 | Argon/Nitrogen (1:1) | 50 | Dark Discharge | B |
| Example 3 | Argon/Nitrogen (1:2) | 33 | Dark Discharge | B |
| Example 4 | Argon/Nitrogen (1:3) | 25 | Dark Discharge | A |
| Example 5 | Argon/Nitrogen (1:4) | 20 | Dark Discharge | A |
| Example 6 | Argon/Nitrogen (1:5) | 17 | Dark Discharge | A |
| Example 7 | Argon/Nitrogen (1:9) | 10 | Dark Discharge | B |
| Example 8 | Argon/Nitrogen (1:49) | 2 | Dark Discharge | B |
| Comparative Example 1 | Argon/Nitrogen (1:0) | 100 | Dark Discharge | C |
| Comparative Example 2 | Helium | — | Not Dark Discharge | — |
| Comparative Example 3 | Nitrogen | — | Not Dark Discharge | — |
| Comparative Example 4 | Hydrogen | — | Not Dark Discharge | — |

<FIG.16>

Gas heater setting temperature : room temperature

<FIG.17>

Gas heater setting temperature : 400 ℃

<FIG.18>

## INTERNATIONAL SEARCH REPORT

| International application No. |
|---|
| **PCT/JP2025/020315** |

| A. | CLASSIFICATION OF SUBJECT MATTER |
|---|---|

*G01N 27/62*(2021.01)i; *H01J 49/16*(2006.01)i
FI: G01N27/62 F; H01J49/16 800

According to International Patent Classification (IPC) or to both national classification and IPC

| B. | FIELDS SEARCHED |
|---|---|

Minimum documentation searched (classification system followed by classification symbols)

G01N27/60-G01N27/70,G01N27/92, H01J40/00-49/48

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2017/033959 A1 (PUBLIC UNIVERSITY CORPORATION YOKOHAMA CITY UNIVERSITY) 02 March 2017 (2017-03-02) paragraphs [0032]-[0060], fig. 1-12 | 1-18 |
| A | JP 2004-157057 A (HITACHI, LTD.) 03 June 2004 (2004-06-03) paragraphs [0022]-[0056], fig. 1-6 | 1-18 |
| A | JP 6-74940 A (HITACHI, LTD.) 18 March 1994 (1994-03-18) paragraphs [0004]-[0036], fig. 1-4 | 1-18 |
| A | JP 2014-206378 A (IAS INC.) 30 October 2014 (2014-10-30) paragraphs [0007]-[0027], fig. 1-5 | 1-18 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 July 2025** | **15 July 2025** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2025/020315**

| Patent document cited in search report | | | Publication date (day/month/year) | Patent family member(s) | | | Publication date (day/month/year) |
|---|---|---|---|---|---|---|---|
| WO | 2017/033959 | A1 | 02 March 2017 | US | 2018/0061622 | A1 | |
| | | | | paragraphs [0064]-[0118], fig. 1-12 | | | |
| | | | | JP | 2017-45571 | A | |
| | | | | EP | 3343590 | A1 | |
| JP | 2004-157057 | A | 03 June 2004 | US | 2004/0104342 | A1 | |
| | | | | paragraphs [0027]-[0063], fig. 1-6 | | | |
| | | | | EP | 1418422 | A1 | |
| | | | | CA | 2447540 | A1 | |
| JP | 6-74940 | A | 18 March 1994 | (Family: none) | | | |
| JP | 2014-206378 | A | 30 October 2014 | WO | 2013/024696 | A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009009228 A
- WO 2010075769 A
- US 7977629 B
- JP 6382166 B
- JP 7453642 B